# EUROPEAN PATENT APPLICATION

(11) **EP 1 187 132 A2**
(43) Date of publication of application: **13.03.2002**
(21) Application number: 01118068.4
(22) Date of filing: 25.07.2001
(51) Int. Cl.: G11B 27/00

(54) **Information providing apparatus and method, and recording medium**

(30) Priority: 01.08.2000 JP 2000233333
(71) Applicant: SONY CORPORATION, Tokyo (JP)
(72) Inventor: Abe, Mototsugu, Sony Corporation, Tokyo (JP); Nishiguchi, Masayuki, Sony Corporation, Tokyo (JP)
(74) Representative: Müller . Hoffmann & Partner Patentanwälte

(57) **Abstract**

An information providing system includes a terminal device (1) and an identification device (2) which are linked with each other via a network (3). When a music signal is transmitted from the terminal device to the identification device via the network, an identification code extracting unit (23) extracts an identification code corresponding to a category which is inserted as a digital watermark in the music signal. A feature extracting unit (24) extracts features of the music signal. A database search unit (25) compares the features of information which belongs to the category corresponding to the identification code extracted by the identification code extracting unit with the features extracted by the feature extracting unit. If a match is found, the music title stored in the database search unit is read according to the features, and is then output to the terminal device.

## Description

### BACKGROUND OF THE INVENTION

### 1. Field of the Invention

The present invention relates to an information providing apparatus and method, and to a recording medium. More particularly, the present invention relates to an information providing apparatus and method capable of providing information more quickly, and to a recording medium.

### 2. Description of the Related Art

When a large amount of video and music information is registered in advance in a database, and a portion of the registered video and music information is provided as a reference signal, it is necessary to compare the reference signal with features of the registered video and music information in order to search for a title corresponding to the reference signal.

As suggested in United States Patent No. 5,210,820 entitled "SIGNAL RECOGNITION SYSTEM AND METHOD" issued to Kenyon on May 11, 1993, the contents of which are incorporated herein by reference, an acoustic signal is segmented into a plurality of frequency band signals by bandpass filters, the moments of which are used as the features and compared.

An approach in which the histogram of an acoustic signal is detected as the features to achieve a quick search is suggested by Kashino et al. in "A Quick Search Algorithm for Acoustic Signals Using Histogram Features," Proc. of IEICE, D-II, Vol. J82-D-II, No. 9, pp. 1365-1373, 1999.

Furthermore, it is proposed in Japanese Unexamined Patent Application Publication No. 2000-59824 that unique codes be inserted in advance in commercials using a technique such as digital watermarking to determine whether or not a commercial is present in a television broadcast or a radio broadcast, as contracted. Another approach is also conceivable in which a code is inserted in advance in information to be searched for and that code is used to search for the information.

However, these approaches have inherent problems.

The approach of detecting a moment of a signal for each frequency band as the features encounters a problem in that it is difficult to perform processing quickly.

The quick search algorithm using the histogram as the features allows for a quicker search than that of the above approach in which moments of signals are detected as the features; however, it takes a long time to search through a large number of objects.

The digital watermark approach makes it possible to perform a quick search; however, since a different code for each title must be inserted as a digital watermark, the existence of a plurality of information providers makes it difficult to manage a unique code for each information provider. Thus, this approach cannot be easily put into practice.

### SUMMARY OF THE INVENTION

Accordingly, it is an object of the present invention to provide an information providing system capable of quickly and reliably providing desired information.

To this end, in one aspect of the present invention, an information providing apparatus includes: a storage unit for storing information, relevant information which is relevant to the information, and features of the information for each category of the information; an acquiring unit for acquiring information to be searched for; a determining unit for determining a category to which the information acquired by the acquiring unit belongs; an extracting unit for extracting features of the information acquired by the acquiring unit; a comparing unit for comparing the features of the information which belongs to the category determined by the determining unit with the features extracted by the extracting unit, the former features being stored in the storage unit; and a searching unit for searching for the target relevant information stored in the storage unit based on the result of the comparison performed by the comparing unit.

The category may have a hierarchical structure.

The determining unit may determine the category based on a digital watermark that has been inserted in the information acquired by the acquiring unit.

An information providing method according to the present invention includes the steps of: storing information, relevant information which is relevant to the information, and features of the information for each category of the information; acquiring information to be searched for; determining a category to which the information acquired in the acquiring step belongs; extracting features of the information acquired in the acquiring step; comparing the features of the information which belongs to the category determined in the determining step with the features extracted in the extracting step, the former features being stored in the storing step; and searching for the target relevant information stored in the storing step based on the result of the comparison performed in the comparing step.

A recording medium according to the present invention having a computer-readable program implementing a method including the steps of: storing information, relevant information which is relevant to the information, and features of the information for each category of the information; acquiring information to be searched for; determining a category to which the information acquired in the acquiring step belongs; extracting features of the information acquired in the acquiring step; comparing the features of the information which belongs to the category determined in the determining step with the features extracted in the extracting step, the former features being stored in the storing step; and searching for the target relevant information stored in the storing step based on the result of the comparison performed in the comparing step.

Accordingly, a category of information which has been acquired is determined, while features of the acquired information is extracted. The features of information which belongs to the category, which are stored, are compared with the extracted features. Based on the result of the comparison, the target relevant information which is stored is searched for. Therefore, the desired information can be quickly and reliably searched for and provided.

In another aspect of the present invention, an information providing apparatus includes: an acquiring unit for acquiring information to be stored; a determining unit for determining a category to which the information acquired by the acquiring unit belongs; an inserting unit for inserting a digital watermark in the information acquired by the acquiring unit so that the digital watermark may correspond to the category determined by the determining unit; a storage unit for storing the information in which the digital watermark is inserted by the inserting unit; and a delivery unit for delivering the information stored in the storage unit via a network.

An information providing method according to the present invention includes the steps of: acquiring information to be stored; determining a category to which the information acquired in the acquiring step belongs; inserting a digital watermark in the information acquired in the acquiring step, the digital watermark corresponding to the category determined in the determining step; storing the information in which the digital watermark is inserted in the inserting step; and delivering the information stored in the storing step via a network.

A recording medium having a computer-readable program implementing a method including the steps of: acquiring information to be stored; determining a category to which the information acquired in the acquiring step belongs; inserting a digital watermark in the information acquired in the acquiring step, the digital watermark corresponding to the category determined in the determining step; storing the information in which the digital watermark is inserted in the inserting step; and delivering the information stored in the storing step via a network.

Accordingly, a category of information which has been acquired is determined, and a digital watermark corresponding to the determined category is inserted in the information. The information having the digital watermark inserted therein is stored, and is also delivered via a network, by broadcasting, or by communication. Therefore, the desired information can be quickly and reliably searched for and provided.

### BRIEF DESCRIPTION OF THE DRAWINGS

Fig. 1 is a block diagram of an information providing system according to the present invention;
Fig. 2 is a block diagram of a database search unit shown in Fig. 1;
Fig. 3 shows example databases which are classified into categories;
Fig. 4 shows example digital watermarks which are inserted in reference signals;
Fig. 5 is a flowchart showing the process of registering data in a database;
Fig. 6 is a flowchart showing the process of searching through a database; and
Fig. 7 is a block diagram of a personal computer.

### DESCRIPTION OF THE PREFERRED EMBODIMENT

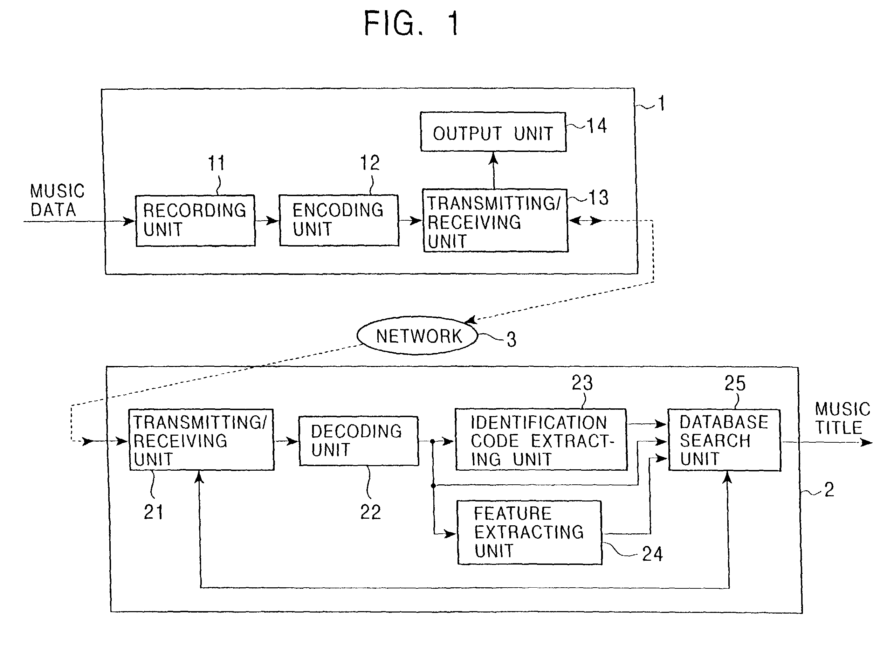

Fig. 1 is a block diagram of an information providing system according to the present invention. The information providing system includes a terminal device 1 and an identification device 2 which are linked with each other via a network 3 such as the Internet. When a portion of music data is provided to the identification device 2 from the terminal device 1 via the network 3, this system allows the identification device 2 to identify the music title, and to inform the terminal device 1 of the result.

The terminal device 1 includes a recording unit 11 for recording music data which is to be transferred to the identification device 2, an encoding unit 12, a transmitting/receiving unit 13, and an output unit 14. The encoding unit 12 encodes a portion of the music information recorded by the recording unit 11, and forwards the encoded portion to the transmitting/receiving unit 13. The transmitting/receiving unit 13 transmits the portion of the music information which is forwarded by the encoding unit 12 to the identification device 2 via the network 3. The transmitting/receiving unit 13 also receives information transmitted from the identification device 2 via the network 3, and outputs it to the output unit 14 such as a monitor.

The identification device 2 includes a transmitting/receiving unit 21 for receiving the music data transmitted 0from the terminal device 1 via the network 3. The transmitting/receiving unit 21 also outputs the title output from a database search unit 25 to the terminal device 1 via the network 3.

The identification device 2 further includes a decoding unit 22, an identification code extracting unit 23, and a feature extracting unit 24. The decoding unit 22 decodes or decompresses the music data transmitted from the transmitting/receiving unit 21, and forwards the resulting data to the identification code extracting unit 23 and the feature extracting unit 24. The identification code extracting unit 23 extracts an identification code which has been inserted as a digital watermark in the music data forwarded by the decoding unit 22, and supplies it to the database search unit 25. The feature extracting unit 24 extracts features of the music data sent from the decoding unit 22. As used herein, the features are implemented as at least one of a waveform, an intensity, a data value, a spectrum of the music data, and the histogram thereof. Otherwise, the features disclosed in the United States Patent No. 5,210,820 or the features described by Kashino et al., as previously noted, may be used.

The database search unit 25 searches for the music title using both the identification code provided from the identification code extracting unit 23 and the features provided from the feature extracting unit 24. The resulting music title is output to a device (not shown), and is also forwarded to the transmitting/receiving unit 21, so that the result is transferred to the terminal device 1 via the network 3. The database search unit 25 also has music data registered therein which is forwarded from the decoding unit 22, if necessary.

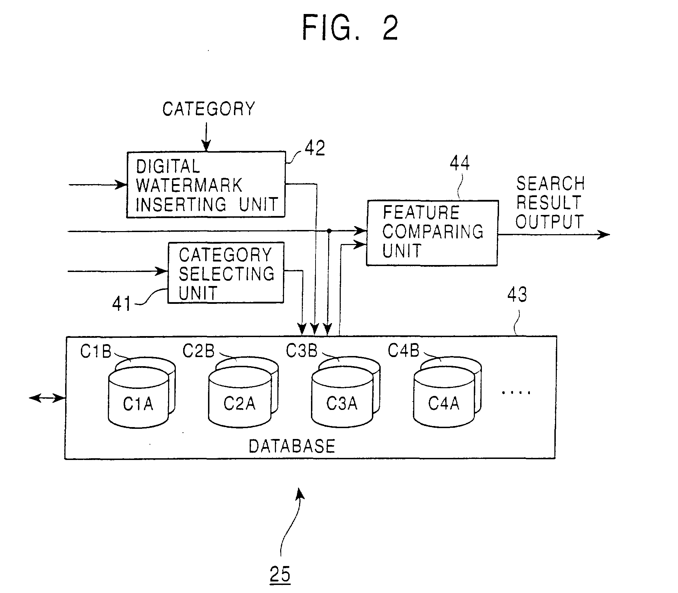

Now, the database search unit 25 is described in detail with reference to Fig. 2. The database search unit 25 includes a category selecting unit 41, a digital watermark inserting unit 42, a database 43, and a feature comparing unit 44. The category selecting unit 41 selects a category corresponding to the input identification code. The selected category is forwarded to the database 43. When music data is registered in the database 43, the digital watermark inserting unit 42 inserts a digital watermark, which represents the associated music category, in the music data. The feature comparing unit 44 compares the features extracted by the feature extracting unit 24 with the features registered in the database 43. If a match is found therebetween, the feature comparing unit 44 reads and outputs the music title corresponding to the features from the database 43.

The database 43 contains music data and information relevant thereto, such as the title, composer, lyric writer, and performer of the music, for each category. For example, the music data of a first category is stored in a database C1B, and the information relevant thereto is stored in a database C1A. In the same way, the music data of an i-th category, where i is an integer more than one, is stored in a database CiB, and the information relevant thereto is stored in a database CiA.

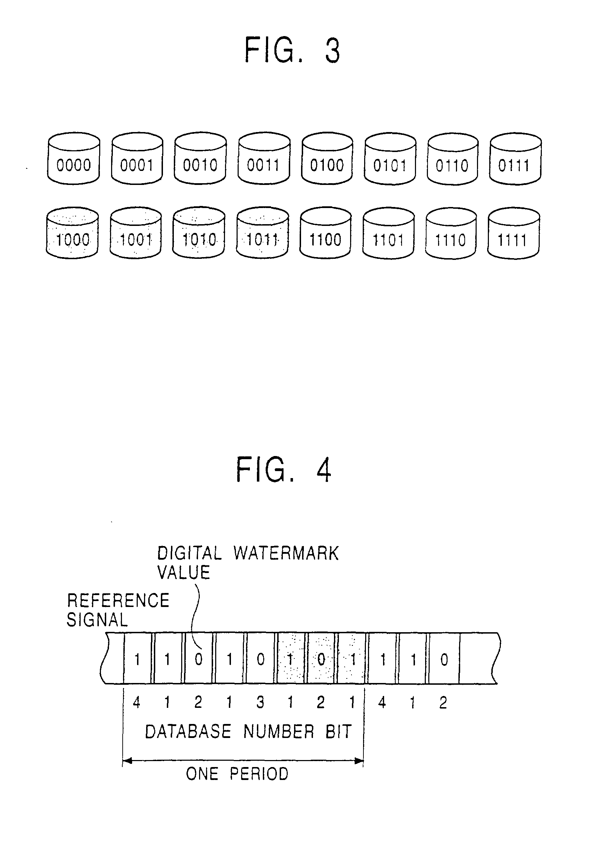

According to this system, as described above, the information provided via the network 3 has a digital watermark corresponding to the associated category inserted therein. For example, as illustrated in Fig. 3, music data which is classified into 16 categories is stored in the database 43. The categories may be represented by 4-bit codes from "0000" to "1111".

Fig. 4 schematically illustrates a music signal in which numbers representing the category to which this music signal belongs are digitally watermarked. The category of this music signal is represented as "1001". The music signal contains the 4-bit value "1001" indicative of a category which is arranged on a bit-by-bit basis in a predetermined unit of music data. In the illustration of Fig. 4, 8 units make up one period in which a digital watermark is inserted. In each period, the MSB (most significant bit) of the code representing a category is most frequently recorded, while the LSB (least significant bit) is least frequently recorded. In Fig. 4, the MSB indicated by numeral 1 is recorded four times, the second bit indicated by numeral 2 is recorded two times, the third bit indicated by numeral 3 is recorded once, and the LSB indicated by numeral 4 is also recorded once.

It is determined in advance which bits in the four bits are located in what position. The MSB is identified by a flag or the like.

A category which is represented by a 4-bit value can be hierarchically expressed. For example, the category of the music data shown in Fig. 4 is represented as "1001," and the music data containing all of the bits indicated by numerals 1 to 4 would allow a category to be uniquely identified. Meanwhile, for example, if the music data in which the bits indicated by numerals 1 and 2 only are digitally watermarked is provided, i.e., a portion of the music data which is shown by shading in Fig. 4 is provided, it is understood that the upper two bits are "10". Therefore, categories of the music data which are represented by "1000", "1001", "1010", or "1011" are possibly identified.

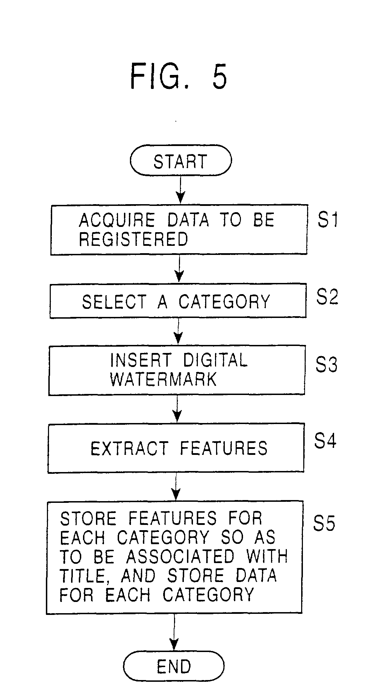

Fig. 5 is a flowchart of the process of registering music data in the database 43. The process begins with step S1, where data to be registered is acquired. Specifically, the transmitting/receiving unit 21 of the identification device 2 receives music data to be registered in the database 43 from any other server (not shown) via the network 3, and the decoding unit 22 decodes it. A manager of the database 43 reads the music signal decoded by the decoding unit 22, and determines which category (for example, classical music, jazz, or popular music) the data belongs to at step S2. The determined category is input to the digital watermark inserting unit 42. At step S3, the digital watermark inserting unit 42 inserts a digital watermark of numbers corresponding to the category directed by the manager in the music data which is forwarded by the decoding unit 22. The digital watermarking used may be a technique disclosed in Japanese Unexamined Patent Application Publication No. 2000-89796.

The feature extracting unit 24 extracts features of the music data from the decoding unit 22, and the resulting features are forwarded to the database 43.

At step S5, the features supplied from the feature extracting unit 24 are stored in the database 43 for each category so as to be associated with information relevant to the music data, such as the title, composer, lyric writer, performer, etc., which is specified by the manager. The database 43 also contains the music data supplied from the decoding unit 22. For example, for the first category, the relevant information is stored in the database C1A, and the music data is stored in the database C1B.

Accordingly, the music data delivered from any other device via the network 3 is received by the database 43, and is stored therein, if necessary. In response to a request from a predetermined user, the stored music data in which a digital watermark corresponding to the associated category is inserted is further transferred from the database 43 via the network 3.

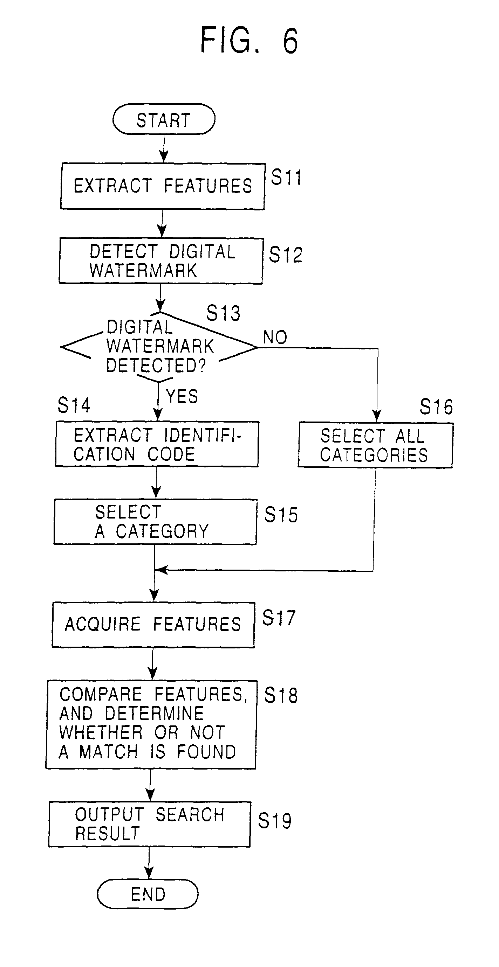

Fig. 6 is a flowchart showing how the identification device 2 operates when a portion of the music data is transferred to the identification device 2 from the terminal device 1 via the network 3 and when a search request for the title is issued from the terminal device 1.

The user of the terminal device 1 records music data, of which the title is desired to be known, in the recording unit 11. A music signal recorded on the recording unit 11 is read therein, and is then input to the encoding unit 12 for encoding. The music data encoded by the encoding unit 12 is transmitted to the identification device 2 from the transmitting/receiving unit 13 via the network 3.

The transmitting/receiving unit 21 of the identification device 2 which receives the music data forwards it to the decoding unit 22 for decoding. The music data decoded by the decoding unit 22 is supplied to the feature extracting unit 24. At step S11, the feature extracting unit 24 extracts features of the input music data, and supplies the resulting features to the feature comparing unit 44.

The music data decoded by the decoding unit 22 is also supplied to the identification code extracting unit 23. At step S12, the identification code extracting unit 23 detects the digital watermark that has been inserted in the music data supplied from the decoding unit 22. As described above, the music data delivered via the network 3 has a digital watermark representing the associated category inserted therein. Thus, if the music data provided from the terminal device 1 matches with the music data that has been delivered to the user of the terminal device 1 via the network 3, tat music data has a digital watermark inserted therein. The inserted digital watermark is then detected.

The identification code extracting unit 23 determines at step S13 whether or not a digital watermark has been extracted. If a digital watermark has been extracted, the identification code, indicative of a category, corresponding to that digital watermark is extracted at step S14, and is then forwarded to the category selecting unit 41 in the database search unit 25.

At step S15, the category selecting unit 41 selects the category corresponding to the identification code obtained by the identification code extracting unit 23, and outputs it to the database 43.

If the music data transferred from the terminal device 1 does not match with the data that has been delivered to the user via the network 3, this means that the music data has no digital watermark inserted therein. Thus, the identification code extracting unit 23 determines at step S13 that a digital watermark is not extracted, and outputs the result of the determination to the category selecting unit 41. At step S16, the category selecting unit 41 selects all categories as the possible category of that music data, and outputs the result to the database 43.

At step S17, the database 43 retrieves the features corresponding to a single category from the database containing the categories supplied from the category selecting unit 41 out of the features stored therein, and outputs it to the feature comparing unit 44.

For example, if the first category is selected by the category selecting unit 41, the features stored in the database C1A are read, and are then supplied to the feature comparing unit 44.

At step S18, the feature comparing unit 44 compares the features supplied from the feature extracting unit 24, i.e., the features extracted at step S11, with the features read from the database 43, i.e., the features acquired at step S17, and determines whether or not a match is found between both features. If a match is not found, the feature comparing unit 44 acquires the features of another music data which belongs to the same category from the database 43, and compares the acquired features with the features supplied from the feature extracting unit 24. The same operation is repeated until a match is found between both features, and, then, at step S19, the feature comparing unit 44 reads the relevant information, such as the title, which is stored in the database 43 according to the features. The relevant information is supplied from the feature comparing unit 44 to the transmitting/receiving unit 21 as a search result output. The transmitting/receiving unit 21 transmits the relevant information to the terminal device 1 via the network 3.

The relevant information transmitted via the network 3 is received by the transmitting/receiving unit 13 in the terminal device 1, and is then output to the output unit 14 for display. This enables the user of the terminal device 1 to know the music title etc. corresponding to the music data that he transmits to the identification device 2.

Accordingly, since a category is selected, and the feature-based search process is performed only on the selected category, there is no need for the feature-based search process on different categories, thereby achieving a quick search.

For instance, in the illustration of Figs. 3 and 4, if the music data on which all of the 4 bits are digitally watermarked is transmitted as a music signal to be searched for, the feature-based search process should be only performed on one of 16 categories. This allows the processing for the search task to be reduced to 1/16 of the case where the feature-based search process is performed on all categories if the features of the categories are the same. If the music data containing the upper 2 bits out of the 4 bits representing a category is transmitted, the feature-based search process should be only performed on four categories represented as "1000", "1001", "1010", and "1011", thereby reducing the processing for the search task to 1/4 of the case where the feature-based search process is performed on all categories.

While the identification of music has been described in the illustrated embodiment, the present invention may be applied to the identification of data other than music, such as video, image, text, or information appropriately combining these materials, such as commercials.

The series of steps may be implemented by hardware, and may also be implemented by software. When the series of steps are implemented by software, a program for the software is installed via a network or from a recording medium to a computer incorporating the dedicated hardware, or to a general-purpose personal computer to which various programs are installed to execute various functions.

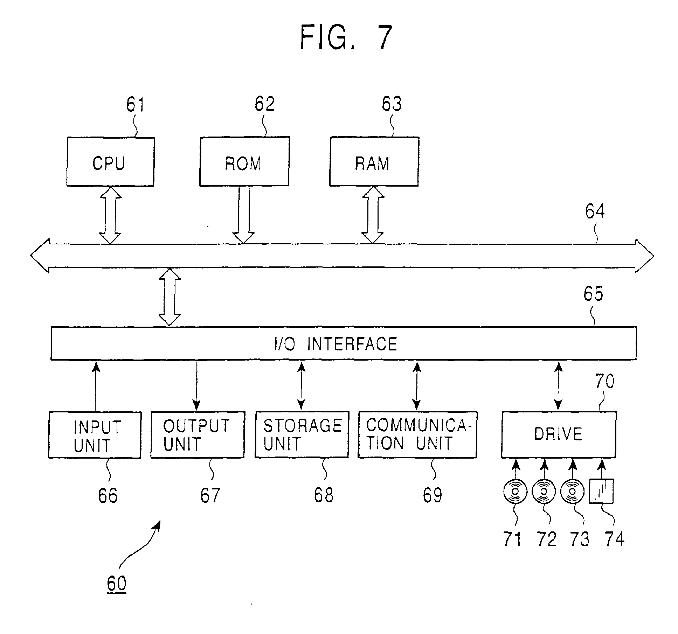

Fig. 7 illustrates a personal computer 60 which embodies this type of computer. The personal computer 60 includes a CPU (central processing unit) 61, a ROM (read only memory) 62, and a RAM (random access memory) 63. The CPU 61 executes various processes according to programs stored in the ROM 62 or programs that are loaded in the RAM 63 from a storage unit 68. The RAM 63 also contains information necessary for the CPU 61 to execute the various processes, if any.

The CPU 61, the ROM 62, and the RAM 63 are connected to each other through a bus 64. An I/O interface 65 is also connected to the bus 64.

An input unit 66 including a keyboard and a mouse, a display such as a CRT or an LCD, and an output unit 67 including a speaker are connected to the I/O interface 65. The storage unit 68 including a hard disk, and a communication unit 69 including a modem and a terminal adapter are further connected to the I/O interface 65. The communication unit 69 performs communication via the network 3.

A drive 70 is also connected to the I/O interface 65, if necessary, and a magnetic disk 71, an optical disk 72, a magneto-optical disk 73, or a semiconductor memory 74 is appropriately attached to the drive 70 so that a computer program read therefrom is installed in the storage unit 68 as necessary.

A recording medium for providing programs is separate from the personal computer 70, as shown in Fig. 7, and comprises packaged media including the magnetic disk 71 such as a floppy disk, the optical disk 72 such as a CD-ROM (compact disk-read only memory) and a DVD (digital versatile disk), the magneto-optical disk 73 such as an MD (mini-disk), and the semiconductor memory 74, which is distributed to provide programs for users. The recording medium further comprises the ROM 62 having programs recorded thereon, and the hard disk incorporated in the storage unit 68, which are provided for users as being incorporated in advance into computers.

As defined herein, the steps implemented by programs recorded on the recording medium may be applied to the process which is performed in a time-series manner along the illustrated sequence, as well as to a process which is performed in parallel or individually even if it is not performed in a time-series manner.

As used herein, the "system" indicates an overall apparatus, device, arrangement, instrument, facilities, and the like which comprises a plurality of apparatuses, devices, arrangements, instrument, facilities, and the like.

## Claims

1. An information providing apparatus comprising:
storage means for storing information, relevant information which is relevant to the information, and features of the information for each category of the information;
acquiring means for acquiring information to be searched for;
determining means for determining a category to which the information acquired by said acquiring means belongs;
extracting means for extracting features of the information acquired by said acquiring means;
comparing means for comparing the features of the information which belongs to the category determined by said determining means with the features extracted by said extracting means, the former features being stored in said storage means; and
searching means for searching for the target relevant information stored in said storage means based on the result of the comparison performed by said comparing means.

2. An information providing apparatus according to Claim 1, wherein the category has a hierarchical structure.

3. An information providing apparatus according to Claim 1, wherein said determining means determines the category based on a digital watermark, the digital watermark being inserted in the information acquired by said acquiring means.

4. An information providing method comprising the steps of:
storing information, relevant information which is relevant to the information, and features of the information for each category of the information;
acquiring information to be searched for;
determining a category to which the information acquired in said acquiring step belongs;
extracting features of the information acquired in said acquiring step;
comparing the features of the information which belongs to the category determined in said determining step with the features extracted in said extracting step, the former features being stored in said storing step; and
searching for the target relevant information stored in said storing step based on the result of the comparison performed in said comparing step.

5. A recording medium having a computer-readable program implementing a method comprising the steps of:
storing information, relevant information which is relevant to the information, and features of the information for each category of the information;
acquiring information to be searched for;
determining a category to which the information acquired in said acquiring step belongs;
extracting features of the information acquired in said acquiring step;
comparing the features of the information which belongs to the category determined in said determining step with the features extracted in said extracting step, the former features being stored in said storing step; and
searching for the target relevant information stored in said storing step based on the result of the comparison performed in said comparing step.

6. An information providing apparatus comprising:
acquiring means for acquiring information to be stored;
determining means for determining a category to which the information acquired by said acquiring means belongs;
inserting means for inserting a digital watermark in the information acquired by said acquiring means, the digital watermark corresponding to the category determined by said determining means;
storage means for storing the information in which the digital watermark is inserted by said inserting means; and
delivery means for delivering the information stored in said storage means via a network.

7. An information providing method comprising the steps of:
acquiring information to be stored;
determining a category to which the information acquired in said acquiring step belongs;
inserting a digital watermark in the information acquired in said acquiring step, the digital watermark corresponding to the category determined in said determining step;
storing the information in which the digital watermark is inserted in said inserting step; and
delivering the information stored in said storing step via a network.

8. A recording medium having a computer-readable program implementing a method comprising the steps of:
acquiring information to be stored;
determining a category to which the information acquired in said acquiring step belongs;
inserting a digital watermark in the information acquired in said acquiring step, the digital watermark corresponding to the category determined in said determining step;
storing the information in which the digital watermark is inserted in said inserting step; and
delivering the information stored in said storing step via a network.
